# EUROPEAN PATENT SPECIFICATION

(11) **EP 2 783 929 B1**
(45) Date of publication and mention of the grant of the patent: **21.08.2019**
(21) Application number: 12851986.5
(22) Date of filing: 31.10.2012
(51) Int. Cl.: B60T 8/34, F16F 1/38, F16F 15/08

(54) **BRAKE FLUID PRESSURE CONTROL DEVICE**
STEUERVORRICHTUNG FÜR BREMSFLÜSSIGKEITSDRUCK
DISPOSITIF DE RÉGULATION DE PRESSION DE LIQUIDE POUR FREINS

(30) Priority: 25.11.2011 JP 2011257770
(43) Date of publication of application: 01.10.2014
(73) Proprietor: Robert Bosch GmbH, 70442 Stuttgart (DE)
(72) Inventor: SAKAMOTO, Takanori, Yokohama-shi Kanagawa 224-8501 (JP)
(86) International application number: PCT/JP2012/078104
(87) International publication number: WO 2013/077159

(56) References cited:
- DE-A1-102005 010 433
- DE-A1-102006 052 213
- JP-A- 2001 050 347
- JP-A- 2008 285 164
- JP-A- 2008 291 973
- JP-A- 2009 510 350
- JP-A- 2010 274 904
- JP-U- S4 811 288
- JP-U- S5 935 755
- JP-U- H04 101 040

## Description

### Technical Field

The present invention relates to a braking liquid pressure control device of which a hydraulic unit performing anti-lock brake control is mounted on a vehicle body by a bracket.

### Background Art

A braking liquid pressure control device in which a hydraulic unit performing anti-lock brake control by controlling pressure of brake liquid supplied to a braking section by a hydraulic circuit is mounted on a vehicle body by a bracket has been known in the past. In this kind of braking liquid pressure control device, the hydraulic unit is supported on the bracket with a support portion, which is fitted to an opening formed at the bracket, interposed therebetween (for example, see PTL 1).

### Citation List

### Patent Literature

PTL 1: JP-A-2008-285164

JP 2010274904 A discloses a hydraulic unit support structure for mounting the hydraulic unit mounted with a motor to a first surface and performing anti-lock brake control by controlling a liquid pressure of a braking fluid fed to a braking part to the vehicle body of a motorcycle.

JP S 59035755 U discloses a rubber vibration insulator fixed to the unit mounting seat and having a groove portion engaged with a mounting foot formed on the air conditioning unit at a substantially central portion of a side surface of the unit mounting seat, wherein the vibration isolator is formed so as to be symmetrical with respect to the vehicle body.

### Summary of Invention

### Technical Problem

However, the support portion is fitted to the bracket with a mount rubber interposed therebetween, and the mount rubber is made of rubber having a large elastic force not so as to fall off from the bracket by the vibration or the like of the vehicle body. For this reason, a large insertion force, a lot of man-hours, and an insertion jig are required to fit the mount rubber to the opening of the bracket.

An object of the invention is to solve the above-mentioned problem of the related art, and to provide a braking liquid pressure control device in which a vibration absorbing member can be easily fitted to a bracket.

### Solution to Problem

The invention provides a braking liquid pressure control device having the features of claim 1.

In this case, the second vibration absorbing member may come into contact with the bracket at a position that is more distant from the opening than the first claw portion of the first vibration absorbing member. The first claw portion of the first vibration absorbing member is formed so that a distance between the opening and a tip of the first claw portion is smaller than a distance between the tip and an outer edge of a surface of the second vibration absorbing member coming into contact with the bracket. The first vibration absorbing member may be formed thicker than the second vibration absorbing member in a direction passing through the opening. The braking liquid pressure control device further includes a sleeve which is fitted into a through-hole formed at the first vibration absorbing member or the second vibration absorbing member and where the bolt of the support portion passes and is disposed. The outer diameter of the sleeve may be larger than the diameter of the through-hole. A plate-like seat surface portion is interposed between the hydraulic unit and the vibration absorbing member, and the seat surface portion is formed integrally with the sleeve.

### Advantageous Effects of Invention

In the invention, a vibration absorbing member can be easily fitted to a bracket.

### Brief Description of Drawings

Fig. 6 is a cross-sectional view of a support portion according to an embodiment that is not part the invention; and
Fig. 7 is a cross-sectional view of a support portion according to an embodiment of the invention.

### Description of Embodiments

A preferred embodiment of the invention will be described below with reference to the drawings.

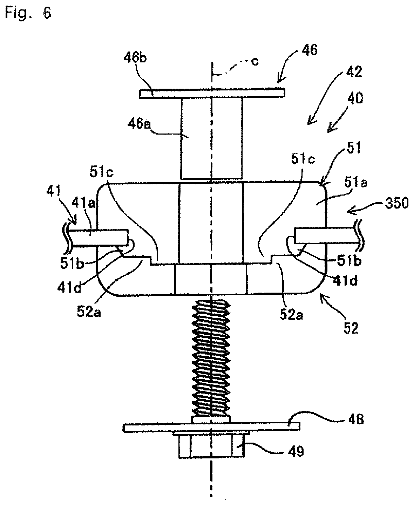

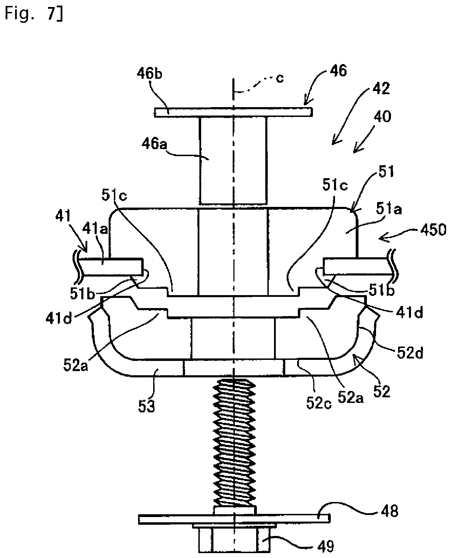

Fig. 7 is a cross-sectional view of a braking liquid pressure control device according to an embodiment of the invention. A braking liquid pressure control device 70 according to the embodiment is different from the braking liquid pressure control device 70 according to the previous embodiment of Fig. 6 in terms of only a part of the structure. Hereinafter, substantially the same structures as the structure of the
previous embodiment of Fig. 6 are denoted by the same reference numerals, the repeated description thereof will be omitted, and portions different from the previous embodiment of Fig. 6 will be described in detail.

The braking liquid pressure control device 70 according to the embodiment of figure 7 includes an auxiliary member 53 that suppresses the deformation of a second mount rubber 52 by being pressed against a back 52c of a surface of the second mount rubber 52 coming into contact with a bracket 41 and a side surface 52d rising from the back 52c. The auxiliary member 53 is formed by pressing a rolled steel sheet, and a gap is formed between the auxiliary member 53 and the bracket 41 so that the auxiliary member 53 does not come into contact with the bracket 41 when being fitted to the bracket 41 together with a mount rubber 450. A contact surface between the auxiliary member 53 and a washer 48 is formed to be flat.

The braking liquid pressure control device 70 according to the invention includes the auxiliary member 53. Accordingly, it is possible to fasten the mount rubber 450 as a whole by tightening a bolt 49 that is integrated with the washer 48. For this reason, it is possible to improve the stiffness of the mount rubber 450 and to support a heavy hydraulic unit 10.

## Claims

1. A braking liquid pressure control device (70) comprising:
a hydraulic unit (10) that performs anti-lock brake control by controlling pressure of brake liquid supplied to a braking section (111, 116);
a bracket (41) that is to be mounted on a vehicle body; and
a support portion (42, 43) that is fitted to an opening (41d) formed at the bracket (41) and supports the hydraulic unit (10),
wherein the support portion (42, 43) includes a spacer (46), a washer (48) and a bolt (49) as a fixing member, the bolt (49) being fixed to the hydraulic unit (10) and first and second vibration absorbing members (51, 52), said first and second vibration absorbing members (51, 52) forming a mount rubber (50), said mount rubber (50) being interposed between the spacer (46), the washer (48), the bolt (49) and the bracket (41), wherein the first vibration absorbing member (51) includes a first claw portion (51b) that is to be caught in the opening (41d) of the bracket (41), and is fitted to the opening (41d),
and the second vibration absorbing member (52) is fitted to the first vibration absorbing member (51),
wherein the bracket (41) is interposed between the first and second vibration absorbing members (51, 52), and
wherein a sleeve (46a) is fitted into a through-hole formed at the first vibration absorbing member (51) or the second vibration absorbing member (52) and where the bolt (49) of the support portion (42, 43) passes and is disposed,
wherein a plate-like seat surface portion (46b) is interposed between the hydraulic unit (10) and the first vibration absorbing member (51) and the seat surface portion (46b) is formed integrally with the sleeve (46a), wherein a fitting portion (51c), which is fitted to the first vibration absorbing member (51), is formed at the second vibration absorbing member (52), wherein the first claw portion (51b) of the first vibration absorbing member (51) is formed so as to protrude to the opposite side of the plate portion (41a) through the opening (41d) and so as to protrude along the plate portion (41a) in a direction in which the first claw portion (51b) expands from the axis (C) of the first mount rubber (51) when the first mount rubber (51) is fitted into the opening (41d),
wherein the first claw portion (51b) is circular having its center at the axis (C), wherein the first claw portion (51b) is formed so that a distance (a) between the opening (41d) and a tip of the first claw portion (51b) is smaller than a distance (b) between the tip and an outer edge of a surface of the second vibration absorbing member (52) coming into contact with the bracket (41), further comprising: an auxiliary member (53) that suppresses the deformation of the second vibration absorbing member (52) by being pressed against a back of a surface of the second vibration absorbing member (52) coming into contact with the bracket (41) and a side surface rising from the back, wherein the auxiliary member (53) is fastened to the mount rubber (450) as a whole by tightening the bolt (49) that is integrated with the washer (48).

2. The braking liquid pressure control device (70) according to claim 1, wherein the second vibration absorbing member (52) comes into contact with the bracket (41) at a position that is more distant from the opening (41d) than the first claw portion (51b) of the first vibration absorbing member (51).

3. The braking liquid pressure control device (70) according to claim 1 or 2, wherein the first vibration absorbing member (51) is formed thicker than the second vibration absorbing member (52) in a direction passing through the opening (41d).

4. The braking liquid pressure control device (70) according to claim 1, wherein the outer diameter of the sleeve (46a) is larger than the diameter of the through-hole.

## Patentansprüche

1. Steuervorrichtung für Bremsflüssigkeitsdruck (70), umfassend:
eine Hydraulikeinheit (10), die eine ABS-Regelung durchführt, indem sie den Druck der einem Bremsbereich (111, 116) zugeleiteten Bremsflüssigkeit regelt;
eine Konsole (41) zur Montage an einer Fahrzeugkarosserie; und
einen Stützabschnitt (42, 43), der an einer an der Konsole (41) ausgebildeten Öffnung (41d) befestigt ist und die Hydraulikeinheit (10) abstützt,
wobei der Stützabschnitt (42, 43) einen Abstandshalter (46), eine Unterlegscheibe (48) und eine Schraube (49) als ein Befestigungselement einschließt, wobei die Schraube (49) an der Hydraulikeinheit (10) und an ersten und zweiten Schwingungsdämpfungselementen (51, 52) befestigt ist, wobei die ersten und zweiten Schwingungsdämpfungselemente (51, 52) ein Gummilager (50) bilden, wobei das Gummilager (50) zwischen dem Abstandshalter (46), der Unterlegscheibe (48), der Schraube (49) und der Konsole (41) angeordnet ist, wobei das erste Schwingungsdämpfungselement (51) einen ersten Klauenabschnitt (51b) einschließt, der von der Öffnung (41d) der Konsole (41) aufgenommen werden soll und an der Öffnung (41d) befestigt ist, und wobei das zweite Schwingungsdämpfungselement (52) am ersten Schwingungsdämpfungselement (51) befestigt ist, wobei die Konsole (41) zwischen den ersten und zweiten Schwingungsdämpfungselementen (51, 52) angeordnet ist, wobei eine Hülse (46a) in ein am ersten Schwingungsdämpfungselement (51) oder am zweiten Schwingungsdämpfungselement (52) ausgebildetes Durchgangsloch eingepasst ist, und wo die Schraube (49) des Stützabschnitts (42, 43) passiert und angeordnet ist, wobei sich ein plattenförmiger Sitzoberflächenabschnitt (46b) zwischen der Hydraulikeinheit (10) und dem ersten Schwingungsdämpfungselement (51) befindet und der Sitzoberflächenabschnitt (46b) integral mit der Hülse (46a) ausgebildet ist, wobei ein am ersten Schwingungsdämpfungselement (51) angebrachter Passabschnitt (51c) am zweiten Schwingungsdämpfungselement (52) ausgebildet ist, wobei der erste Klauenabschnitt (51b) des ersten Schwingungsdämpfungselements (51) so ausgebildet ist, dass er zur gegenüberliegenden Seite des Plattenabschnitts (41a) durch die Öffnung (41d) ragt und entlang des Plattenabschnitts (41a) in einer Richtung hervorragt, in der sich der erste Klauenabschnitt (51b) von der Achse (C) des ersten Gummilagers (51) erstreckt, wenn das erste Gummilager (51) in die Öffnung (41d) eingepasst ist, wobei der erste Klauenabschnitt (51b) kreisförmig ist und mit seinem Zentrum auf der Achse (C) liegt, wobei der erste Klauenabschnitt (51b) so ausgebildet ist, dass eine Distanz (a) zwischen der Öffnung (41d) und einer Spitze des ersten Klauenabschnitts (51b) kleiner als eine Distanz (b) zwischen der Spitze und einer Außenkante einer Oberfläche des mit der Konsole (41) in Kontakt kommenden zweiten Schwingungsdämpfungselements (52) ist, weiterhin umfassend: ein Hilfselement (53), das die Verformung des zweiten Schwingungsdämpfungselements (52) unterdrückt, indem es gegen eine Rückseite einer Oberfläche des zweiten Schwingungsdämpfungselements (52) gedrückt wird, das mit der Konsole (41) und mit einer von der Rückseite aus ansteigenden Seitenoberfläche in Kontakt kommt, wobei das Hilfselement (53) insgesamt am Gummilager (450) durch Anziehen der mit der Unterlegscheibe (48) integrierten Schraube (49) befestigt ist.

2. Steuervorrichtung für Bremsflüssigkeitsdruck (70) nach Anspruch 1, wobei das zweite Schwingungsdämpfungselement (52) mit der Konsole (41) an einer Position in Kontakt kommt, die von der Öffnung (41d) weiter entfernt als der erste Klauenabschnitt (51b) des ersten Schwingungsdämpfungselements (51) ist.

3. Steuervorrichtung für Bremsflüssigkeitsdruck (70) nach Anspruch 1 oder 2, wobei das erste Schwingungsdämpfungselement (51) in einer durch die Öffnung (41d) verlaufenden Richtung dicker als das zweite Schwingungsdämpfungselement (52) ist.

4. Steuervorrichtung für Bremsflüssigkeitsdruck (70) nach Anspruch 1, wobei der Außendurchmesser der Hülse (46a) größer als der Durchmesser des Durchgangslochs ist.

## Revendications

1. Dispositif de régulation de pression de liquide de freinage (70) comprenant :
une unité hydraulique (10) qui effectue une régulation de freinage antiblocage en régulant la pression du liquide de freinage fourni à une section de freinage (111, 116) ;
un support (41) qui doit être monté sur une carrosserie de véhicule ; et
une partie d'appui (42, 43) qui est montée sur une ouverture (41d) formée au niveau du support (41) et supporte l'unité hydraulique (10),
la partie d'appui (42, 43) comprenant une entretoise (46), une rondelle (48) et un boulon (49) en tant qu'élément de fixation, le boulon (49) étant fixé à l'unité hydraulique (10) et aux premier et second éléments absorbant les vibrations (51, 52), lesdits premier et second éléments absorbant les vibrations (51, 52) formant un caoutchouc de montage (50), ledit caoutchouc de montage (50) étant interposé entre l'entretoise (46), la rondelle (48), le boulon (49) et le support (41), le premier élément absorbant les vibrations (51) comprenant une première partie griffe (51b) qui doit être prise dans l'ouverture (41d) du support (41), et est montée sur l'ouverture (41d),
et le second élément absorbant les vibrations (52) étant monté sur le premier élément absorbant les vibrations (51),
le support (41) étant interposé entre les premier et second éléments absorbant les vibrations (51, 52), et
dans lequel un manchon (46a) est inséré dans un trou traversant formé au niveau du premier élément absorbant les vibrations (51) ou du second élément absorbant les vibrations (52) et où le boulon (49) de la partie d'appui (42, 43) passe et est disposé,
une partie de surface de siège du type plaque (46b) étant interposée entre l'unité hydraulique (10) et le premier élément absorbant les vibrations (51) et la partie de surface de siège (46b) étant formée d'une seule pièce avec le manchon (46a), une partie de montage (51c), qui est montée sur le premier élément absorbant les vibrations (51), étant formée au niveau du second élément absorbant les vibrations (52), la première partie griffe (51b) du premier élément absorbant les vibrations (51) étant formée de sorte à faire saillie vers le côté opposé de la partie plaque (41a) à travers l'ouverture (41d) et de sorte à faire saillie le long de la partie plaque (41a) dans une direction dans laquelle la première partie griffe (51b) s'étend depuis l'axe (C) du premier caoutchouc de montage (51) lorsque le premier caoutchouc de montage (51) est inséré dans l'ouverture (41d), la première partie griffe (51b) étant circulaire et ayant son centre sur l'axe (C), la première partie griffe (51b) étant formée de sorte qu'une distance (a) entre l'ouverture (41d) et une pointe de la première partie griffe (51b) soit inférieure à une distance (b) entre la pointe et un bord extérieur d'une surface du second élément absorbant les vibrations (52) venant au contact du support (41), comprenant en outre : un élément auxiliaire (53) qui supprime la déformation du second élément absorbant les vibrations (52) en étant pressé contre une face arrière d'une surface du second élément absorbant les vibrations (52) venant en contact avec le support (41) et une surface latérale montant par l'arrière, l'élément auxiliaire (53) étant fixé au caoutchouc de montage (450) dans son ensemble par serrage du boulon (49) qui est formé d'une seule pièce avec la rondelle (48).

2. Dispositif de régulation de pression de liquide de freinage (70) selon la revendication 1, le second élément absorbant les vibrations (52) venant en contact avec le support (41) à une position qui est plus éloignée de l'ouverture (41d) que la première partie griffe (51b) du premier élément absorbant les vibrations (51).

3. Dispositif de régulation de pression de liquide de freinage (70) selon la revendication 1 ou 2, le premier élément absorbant les vibrations (51) étant formé plus épais que le second élément absorbant les vibrations (52) dans une direction passant à travers l'ouverture (41d).

4. Dispositif de régulation de pression de liquide de freinage (70) selon la revendication 1, le diamètre extérieur du manchon (46a) étant supérieur au diamètre du trou traversant.
